# EUROPÄISCHE PATENTANMELDUNG

(11) **EP 1 700 728 A2**
(43) Veröffentlichungstag der Anmeldung: **13.09.2006**
(21) Anmeldenummer: 06110744.7
(22) Anmeldetag: 07.03.2006
(51) Int. Cl.: B60J 7/12, F15B 11/042, F15B 11/044

(54) **Hydraulische Betätigungsvorrichtung, insbesondere für ein Cabriolet**

(30) Priorität: 08.03.2005 DE 102005010638
(71) Anmelder: ROBERT BOSCH GMBH, 70442 Stuttgart (DE)
(72) Erfinder: Huber, Andreas, 89558 Böhmenkirch (DE); Kliffken, Markus, 79588 Efringen-Kirchen (DE); Rieger, Vincent, 76139 Karlsruhe (DE); Mueller, Matthias, 86356 Neusäß (DE)

(57) **Zusammenfassung**

Die Erfmdung betrifft eine hydraulische Betätigungsvorrichtung sowie ein Verfahren zur Bedienung einer solchen mit zumindest einem Hydraulikzylinder (2). In dem Hydraulikzylinder (2) ist ein Kolben (3) angeordnet, der in einem ersten Stelldruckraum (6) mit einer hydraulischen Kraft beaufschlagbar ist. Der erste Stelldruckraum (6) ist mit einer Druckmittelquelle (19) oder einem Tankvolumen (24) verbindbar. Der erste Stelldruckraum (6) ist mit dem Tankvolumen (24) über ein erstes Ventil (15) und mit der Druckmittelquelle (19) über ein zweites Ventil (16) verbindbar.

## Beschreibung

Die Erfindung betrifft eine hydraulische Betätigungsvorrichtung mit zumindest einem Hydraulikzylinder.

Hydraulische Betätigungsvorrichtungen werden in der Automobilindustrie häufig eingesetzt, um beispielsweise Kofferraumdeckel, automatisch ausfahrende Spoiler oder Verdecke von Cabriolets zu betätigen. Eine Betätigungsvorrichtung für ein Verdeck von einem Cabriolet ist aus der DE 102 19 513 A1 bekannt. Bei der dort vorgeschlagenen Betätigungsvorrichtung sind zwei doppelseitig wirkende Hydraulikzylinder miteinander gekoppelt. Die Koppelung wird in Form einer Serienschaltung durchgeführt, so dass die Wege, die die Kolben in den beiden Hydraulikzylindern zurücklegen in einem festen Verhältnis zueinander stehen. Zur Betätigung wird jeweils einer der beiden Arbeitsdruckräume der Hydraulikzylinder mit einem 3/2-Wegeventil verbunden. Über das 3/2-Wegeventil wird der Arbeitsdruckraum des Hydraulikzylinders entweder mit einer Druckmittelquelle oder mit einem Tankvolumen verbunden.

Die vorgeschlagene Betätigungsvorrichtung hat den Nachteil, dass aufgrund der Verwendung von 3/2-Wegeventilen eine hydraulische Abschaltung bzw. ein Blockieren der Hydraulikzylinder in einer bestimmten Position, nur durch die zusätzliche Verwendung eines Rückschlagventils erfolgen kann. So ist es zur hydraulischen Blockierung des Kolbens in dem Hydraulikzylinder erforderlich, das Ventil so zu schalten, dass der entsprechende Arbeitsdruckraum von der Druckmittelquelle über das Ventil mit einem Druck beaufschlagt wird. Zum Blockieren ist dann stromaufwärts des Ventils ein Rückschlagventil vorgesehen, welches in Richtung zu dem Ventil hin öffnet. Um Bauraum einzusparen, sind die Rückschlagventile in die 3/2-Wegeventile integriert. Solche speziell anzufertigenden Ventile sind jedoch teuer. Da darüber hinaus bei einem doppelseitig wirkenden Hydraulikzylinder für beide Arbeitsdruckräume jeweils eine solche Ventileinheit erforderlich ist, verursacht ein System, welches aus mehreren solcher Hydraulikzylindern besteht, erhebliche Kosten.

Es ist daher die Aufgabe der Erfindung, eine hydraulische Betätigungsvorrichtung zu schaffen, bei der kostengünstige Ventile eingesetzt werden können und die trotzdem ein hydraulisches Blockieren des in einem Hydraulikzylinder angeordneten Kolbens erlaubt.

Die Aufgabe wird durch die erfindungsgemäße hydraulische Betätigungsvorrichtung mit den Merkmalen des Anspruchs 1 gelöst.

Bei der erfindungsgemäßen hydraulischen Betätigungsvorrichtung ist in zumindest einem Hydraulikzylinder ein Kolben angeordnet. Der Kolben ist in einem ersten Stelldruckraum mit einer hydraulischen Kraft beaufschlagbar. Beim Benutzen der Betätigungsvorrichtung wird der erste Stelldruckraum entweder mit einer Druckmittelquelle oder mit einem Tankvolumen verbunden. Hierzu ist der erste Stelldruckraum erfmdungsgemäß mit dem Tankvolumen über ein erstes Ventil und mit der Druckmittelquelle über ein zweites Ventil verbindbar.

Die erFmdungsgemäße hydraulische Betätigungsvorrichtung hat den Vorteil, dass die beiden Funktionen Bedrücken des Stelldruckraums und Entspannen des Stelldruckraums voneinander entkoppelt über zwei separate Ventile durchgeführt werden. Damit kann für das erste Ventil und das zweite Ventil jeweils ein einfaches Ventil eingesetzt werden, welches beispielsweise auch in anderen Systemen einsetzbar ist und in hoher Stückzahl produziert wird. Durch die Verwendung solcher einfachen Ventile, über die eine Trennung der Funktion Verbinden des Tankvolumens mit dem Stelldruckraum und Verbinden der Druckmittelquelle mit dem Stelldruckraum möglich ist, ist eine erhebliche Kosteneinsparung möglich.

Die Unteransprüche betreffen vorteilhafte Weiterbildungen der erfindungsgemäßen hydraulischen Betätigungsvorrichtung.

Gemäß einer bevorzugten Ausführungsform ist die hydraulische Betätigungsvorrichtung in zwei entgegen gesetzte Richtungen mit einer hydraulischen Kraft beaufschlagbar. Hierzu ist in dem Hydraulikzylinder neben dem ersten Stelldruckraum ein zweiter Stelldruckraum vorgesehen, so dass der die beiden Stelldruckräume voneinander trennende Kolben in beiden Richtungen mit einer hydraulischen Kraft beaufschlagbar ist. Dabei ist der zweite Stelldruckraum über ein drittes Ventil mit einem Tankvolumen bzw. über ein viertes Ventil mit einer Druckmittelquelle verbindbar.

Besonders vorteilhaft ist es, sämtliche Ventile als 2/2-Wegeventile auszuführen, die zwischen zwei Schaltpositionen umgeschaltet werden können, wobei in jeweils einer Schaltposition der Durchfluss gesperrt und in der anderen Schaltposition der Durchfluss freigegeben ist. Dadurch können sowohl für den ersten Stelldruckraum als auch für den zweiten Stelldruckraum die Ventile in eine den Durchfluss sperrende Schaltposition gebracht werden. Damit ist der Kolben hydraulisch fixiert.

Gemäß einer weiteren bevorzugten Ausführungsform werden die beiden jeweils dem ersten Stelldruckraum oder dem zweiten Stelldruckraum zugeordneten Ventile durch jeweils eine Feder in entgegen gesetzten Schaltpositionen gehalten. Damit wird z. B. eine Verbindung zwischen der Druckmittelquelle und dem ersten Stelldruckraum hergestellt, während eine Verbindung von dem ersten Stelldruckraum zu dem Tankvolumen hin gesperrt ist, ohne dass durch eine Steuerungsvorrichtung eines der Ventile betätigt werden muss. Besonders vorteilhaft ist es, wenn die beiden Ventile, die dem zweiten Stelldruckraum zugeordnet sind, entsprechend mit jeweils einer Feder in ihrer Ruheposition gehalten werden.

Besonders vorteilhaft ist es außerdem, als Druckmittelquelle eine elektromotorisch angetriebene Pumpe einzusetzen. Soll z. B. die Bewegungsgeschwindigkeit des Kolbens variiert werden, wird die Leistung der Pumpe durch eine Bedarfssteuerung angepaßt. Als Option kann auch in einfacher Weise die Drehzahl einer elektromotorisch angetriebenen Konstantpumpe eingestellt werden, indem die Drehzahl des antreibenden Elektromotors verändert wird und so die Bewegungsgeschwindigkeit variiert wird.

Ein bevorzugtes Ausführungsbeispiel der erfindungsgemäßen hydraulischen Betätigungsvorrichtung ist in der Zeichnung dargestellt und wird in der Beschreibung detailliert erläutert. Es zeigen:
- Fig. 1: einen hydraulischen Schaltplan einer erfindungsgemäßen hydraulischen Betätigungsvorrichtung.
- Fig.2 und Fig.3: weitere Ausführungsvarianten der hydraulischen Betätigungsvorrichtung gemäß Fig. 2.

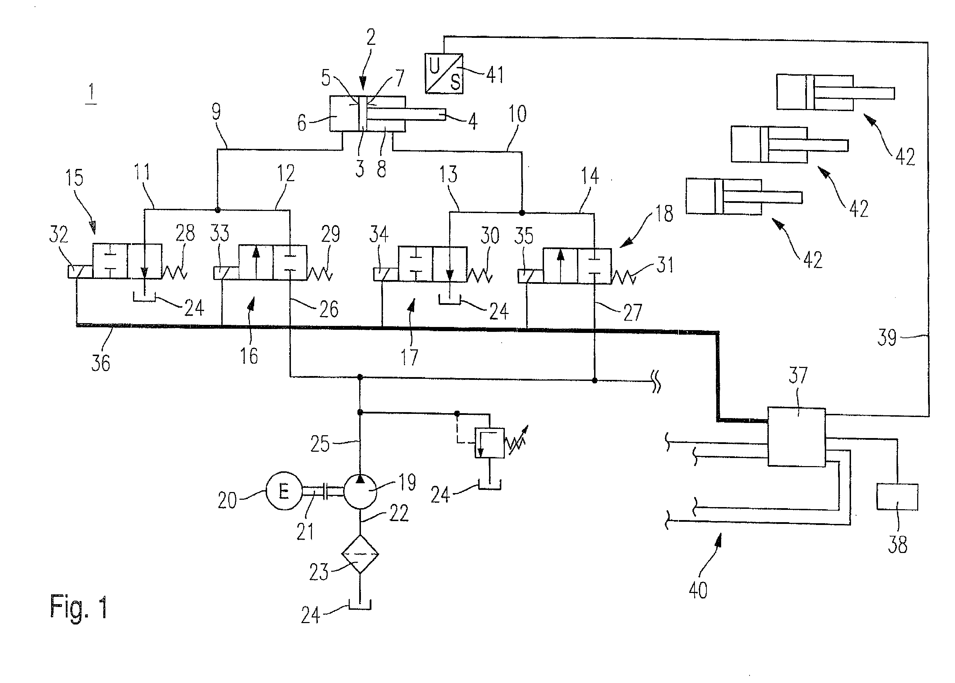

Die in der Fig. 1 dargestellte hydraulische Betätigungsvorrichtung umfasst einen Hydraulikzylinder 2, in dem ein Kolben 3 längs verschiebbar angeordnet ist. Um die Bewegung des Kolbens 3 auf eine zu betätigende Klappe oder beispielsweise ein Verdeck eines Cabriolets zu übertragen, ist mit dem Kolben 3 eine Kolbenstange 4 fest verbunden.

Der Kolben 3 weist eine erste Kolbenfläche 5 auf, die einen ersten Stelldruckraum 6 in dem Hydraulikzylinder 2 begrenzt. Auf der von der ersten Kolbenfläche 5 abgewandten Seite ist an dem Kolben 3 eine zweite Kolbenfläche 7 ausgebildet, die entsprechend einen zweiten Stelldruckraum 8 in dem Hydraulikzylinder 2 begrenzt. In Abhängigkeit von der auf den Kolben 3 wirkenden resultierenden hydraulischen Kraft wird der Kolben 3 in dem Hydraulikzylinder 2 in axialer Richtung verschoben. Zum Erzeugen der hydraulischen Kraft auf den Kolben 3 ist über eine erste Stelldruckleitung 9 der Druck in dem ersten Stelldruckraum 6 und über eine zweite Stelldruckleitung 10 der Druck in dem zweiten Stelldruckraum 8 veränderbar. Die erste Stelldruckleitung 9 verzweigt sich in einen ersten Leitungszweig 11 und einen zweiten Leitungszweig 12. Die zweite Stelldruckleitung 10 verzweigt sich in einen dritten Leitungszweig 13 sowie einen vierten Leitungszweig 14. Über den ersten Leitungszweig 11 ist der erste Stelldruckraum 6 mit einem ersten Ventil 15 verbunden. Über den zweiten Leitungszweig 12 ist der erste Stelldruckraum 6 mit einem zweiten Ventil 16 verbunden. Dementsprechend ist der zweite Stelldruckraum 8 über einen dritten Leitungszweig 13 mit einem dritten Ventil 17 und über den vierten Leitungszweig 14 mit einem vierten Ventil 18 verbunden.

Der erste Stelldruckraum 6 und der zweite Stelldruckraum 8 sind über das zweite Ventil 16 bzw. das vierte Ventil 18 mit einer Druckmittelquelle verbindbar. Als Druckmittelquelle dient im dargestellten Ausführungsbeispiel eine Hydropumpe 19, die vorzugsweise als Konstantpumpe ausgeführt ist. Die Hydropumpe 19 ist zur Förderung in lediglich einer Richtung vorgesehen und wird von einem Elektromotor 20 angetrieben, der mit der Hydropumpe 19 über eine Welle 21 verbunden ist. Die Hydropumpe 19 saugt Druckmittel über eine Saugleitung 22 und einen darin angeordneten Filter 23 aus einem Tankvolumen 24 an. Das von der Hydropumpe 19 angesaugte Druckmittel wird von der Hydropumpe 19 in eine Arbeitsdruckleitung 25 gefördert. Die Arbeitsdruckleitung 25 verzweigt sich in einen ersten Arbeitsdruckleitungszweig 26 und einen zweiten Arbeitsdruckleitungszweig 27.

Der erste Arbeitsdruckleitungszweig 26 ist mit dem zweiten Ventil 16 verbunden. Der zweite Arbeitsdruckleitungszweig 27 ist mit dem vierten Ventil 18 verbunden. Über das zweite Ventil 16 kann eine durchströmbare Verbindung zwischen dem ersten Arbeitsdruckleitungszweig 26 und dem zweiten Leitungszweig 12 hergestellt werden, so dass das von der Hydropumpe 19 in die Arbeitsdruckleitung 25 geförderte Druckmittel über den ersten Arbeitsdruckleitungszweig 26, den zweiten Leitungszweig 12 sowie die erste Stelldruckleitung 9 in den ersten Stelldruckraum 6 strömt und dort die erste Kolbenfläche 5 mit einer hydraulischen Kraft beaufschlagt.

Ebenso kann durch das vierte Ventil 18 der zweite Arbeitsdruckleitungszweig 27 mit dem vierten Leitungszweig 14 durchströmbar verbunden werden. Das von der Hydropumpe 19 in die Arbeitsdruckleitung 25 geförderte Druckmittel strömt dann über den zweiten Arbeitsdruckleitungszweig 27, den vierten Leitungszweig 14 sowie die zweite Stelldruckleitung 10 in den zweiten Stelldruckraum 8. Dort wird die zweite Kolbenfläche 7 mit einer hydraulischen Kraft beaufschlagt. Bei dem in der Fig. 1 dargestellten Ausführungsbeispiel sind die erste Kolbenfläche 5 und die zweite Kolbenfläche 7 unterschiedlich groß. Werden daher die erste Kolbenfläche 5 und die zweite Kolbenfläche 7 beide mit dem von der Hydropumpe 19 erzeugten Druck beaufschlagt, so bewegt sich der Kolben 3 samt der Kolbenstange 4 in der Fig. 1 nach rechts und verringert damit das Volumen des zweiten Stelldruckraums 8.

Der erste Stelldruckraum 6 und der zweite Stelldruckraum 8 sind über das erste Ventil 15 bzw. das dritte Ventil 17 zu dem Tankvolumen 24 hin entspannbar. Hierzu ist durch das erste Ventil 15 eine durchströmbare Verbindung von dem ersten Leitungszweig 11 in das Tankvolumen 24 herstellbar. Damit wird bei einer entsprechenden Schaltstellung des ersten Ventils 15 der erste Stelldruckraum 6 über die erste Stelldruckleitung 9 und den ersten Leitungszweig 11 in das Tankvolumen 24 entspannt.

Befindet sich das dritte Ventil 17 in einer entsprechenden Schaltposition, so wird der dritte Leitungszweig 13 mit dem Tankvolumen 24 verbunden und der zweite Stelldruckraum 8 über die zweite Stelldruckleitung 10 sowie den dritten Leitungszweig 13 in das Tankvolumen 24 entspannt.

Die Ventile 15-18 sind bevorzugt 2/2-Wegeventile, die jeweils durch eine Feder belastet in ihrer Ruheposition gehalten werden. Das erste Ventil 15 wird durch eine erste Feder 28 in einer Position gehalten, in der eine durchströmbare Verbindung von dem ersten Leitungszweig 11 zu dem Tankvolumen 24 besteht. In entgegen gesetzter Richtung wird das erste Ventil 15 durch die Kraft eines Elektromagneten 32 beaufschlagt, der bei entsprechender Bestromung das erste Ventil 15 in eine erste Schaltposition bringt, in der der Durchfluss gesperrt ist. In dieser ersten Schaltposition des ersten Ventils 15 ist damit ein Entspannen des ersten Stelldruckraums 6 über den ersten Leitungszweig 11 in das Tankvolumen 24 nicht möglich. Wird der erste Elektromagnet 32 nicht bestromt, so bringt die erste Feder 28 das erste Ventil 15 zurück in seine zweite Schaltposition, in der der erste Stelldruckraum 6 in das Tankvolumen 24 entspannt wird.

Anders als das erste Ventil 15 wird das zweite Ventil 16, das parallel zu dem ersten Ventil 15 angeordnet ist, durch die Kraft einer zweiten Feder 29 in Richtung der ersten Schaltposition als Ruheposition beaufschlagt. So lange ein in entgegen gesetzter Richtung wirkender zweiter Elektromagnet 32 nicht bestromt ist, ist damit keine durchströmbare Verbindung zwischen dem ersten Arbeitsdruckleitungszweig 26 sowie dem zweiten Leitungszweig 12 hergestellt. Erst wenn der zweite Elektromagnet 33 bestromt wird, wird das zweite Ventil 16 in Richtung seiner zweiten Schaltstellung betätigt, in der Druckmittel aus dem ersten Arbeitsdruckleitungszweig 26 in den zweiten Leitungszweig 12 strömen kann. In dieser zweiten Schaltposition des zweiten Ventils 16 wird Druckmittel von der Hydropumpe 19 in den ersten Stelldruckraum 6 gefördert.

Das dritte Ventil 17 entspricht in seinem Aufbau dem ersten Ventil 15, wobei es durch eine dritte Feder 30 in seiner zweiten Schaltstellung gehalten wird, in der der zweite Stelldruckraum 8 in Richtung des Tankvolumens 24 entspannt wird. Entgegen der Kraft der dritten Feder 30 wirkt ebenfalls ein Elektromagnet 34, der das dritte Ventil 17 mit einer Kraft in Richtung der ersten Schaltstellung beaufschlagt.

Schließlich ist auch das vierte Ventil 18 mit einer vierten Feder 31 beaufschlagt, die es in seiner Ruheposition hält. Die Ruheposition des vierten Ventils 18 ist wie bei dem zweiten Ventil 16 die erste Schaltposition des Ventils, in der der Durchfluss gesperrt ist. Entgegen der Kraft der vierten Feder 31 ist an dem vierten Ventil 18 ein vierter Elektromagnet 35 angeordnet, der bei einem entsprechenden anliegenden Signal das vierte Ventil 18 in seine zweite Schaltposition bringt. In der zweiten Schaltposition des vierten Ventils 18 wird durch die Hydropumpe 19 der zweite Stelldruckraum 8 bedrückt.

Bei der gewählten Ausführung, bei der in Ruhe das erste Ventil 15 und das dritte Ventil 17 in ihrer zweiten Schaltposition gehalten werden und gleichzeitig durch die entsprechenden Federn das zweite Ventil 16 und das vierte Ventil 18 in ihrer ersten Schaltposition gehalten werden, wird erreicht, dass der Druck in dem ersten Stelldruckraum 6 und in dem zweiten Stelldruckraum 8 dem Druckniveau des Tankvolumens 24 entspricht. Der Hydraulikzylinder 2 ist damit drucklos. Es ist jedoch ebenso denkbar, die jeweils andere Schaltposition der Ventile 15-18 als Ruheposition zu wählen. Wichtig ist dabei lediglich, dass die paarweise einer Stelldruckkammer zugeordneten Ventile 15, 16 bzw. 17, 18 als Ruheposition jeweils unterschiedliche Schaltpositionen aufweisen. Vorzugsweise stimmen die Schaltpositionen des ersten und zweiten Ventils 15, 16 und des dritten und vierten Ventils 17, 18 paarweise überein, so dass die Ruheposition des ersten Ventils 15 der Ruheposition des dritten Ventils 17 und die Ruheposition des zweiten Ventils 16 der Ruheposition des vierten Ventils 18 entspricht.

Die vier Elektromagneten 32-35 zur Betätigung der Ventile 15-18 werden über eine elektrische Leitung 36 angesteuert. Die elektrische Leitung 36 kann z. B. ein Teil eines Bussystems sein, über das die Elektromagneten 32-35 individuell und unabhängig voneinander angesteuert werden können. Die elektrische Leitung 36 ist mit einem Steuergerät 37 verbunden. Über das Steuergerät 37 werden die Schaltpositionen der Elektromagneten 32-35 definiert und dementsprechend ein jedem Elektromagneten 32-35 individuell bemessener Strom zugeführt.

Um z. B. den Öffnungs- oder Schließvorgang eines Verdecks eines Cabriolets zu starten, wird dem Steuergerät 37 durch einen Betätigungsschalter 38 ein entsprechendes Startsignal übermittelt. Um das Ende eines Stellvorgangs erkennen zu können, ist mit einem Eingang des Steuergeräts 37 eine Signalleitung 39 verbunden, über die dem Steuergerät 37 ein Spannungssignal eines Wegmessers 41 zugeführt wird. Durch den Wegmesser 41 kann die jeweilige Position der Kolbenstange 4 erfasst werden, so dass beispielsweise gegen Ende einer Stellbewegung die Drehzahl des Elektromotors 20 reduziert werden kann. Durch eine Drehzahlreduzierung des Elektromotors 20 wird von der als Konstantpumpe ausgeführten Hydropumpe 19 eine kleinerer Volumenstrom in die Arbeitsdruckleitung 25 gefördert. Die Stellbewegung verlangsamt sich daher.

Über Ein-/Ausgänge 40 kommuniziert das Steuergerät 37 mit anderen Baugruppen des Fahrzeugs. Einer dieser Ausgänge kann z. B. die Drehzahl des Elektromotors 20 steuern.

Es ist für den Fachmann selbstverständlich, dass sich die beschriebene Betätigungsvorrichtung nicht auf die Anwendung mit lediglich einem Hydraulikzylinder 1 beschränkt. Vielmehr ist eine Anwendung zusammen mit mehreren Hydraulikzylindern 42 möglich. Sind die weiteren Hydraulikzylinder 42 jeweils wiederum als doppelt wirkende Hydraulikzylinder 42 ausgeführt, so ist jedem der so entstehenden Stelldruckräume der weiteren Hydraulikzylinder 42 ein Paar von Ventilen zugeordnet, wie dies für den Hydraulikzylinder 2 in der Fig. 1 dargestellt ist. Durch die Verwendung von 2/2-Wegeventilen werden auf diese Weise sehr kompakte Systeme erstellt.

Es ist außerdem möglich, zumindest einen Teil der Ventile als Proportionalventile auszubilden. Durch die Verwendung eines Proportionalventils z. B. als zweites Ventil 16 bzw. viertes Ventil 18 ist der Volumenstrom in den ersten Stelldruckraum 6 oder den zweiten Stelldruckraum 18 unabhängig von einer Drehzahlsteuerung des Elektromotors steuerbar. Auf diese Weise lässt sich ebenfalls die Bewegungsgeschwindigkeit des Kolbens 3 und damit der Kolbenstange 4 beeinflussen. Als Alternative können auch das erste Ventil 15 und das zweite Ventil 17 als Proportionalventile ausgebildet sein. In einem solchen Fall wird der Kolben 3 hydraulisch eingespannt, indem das Abströmen von Druckmittel aus dem sich verkleinernden Stelldruckraum 6 bzw. 8 über das Proportionalventil 15 bzw. 17 erfolgt.

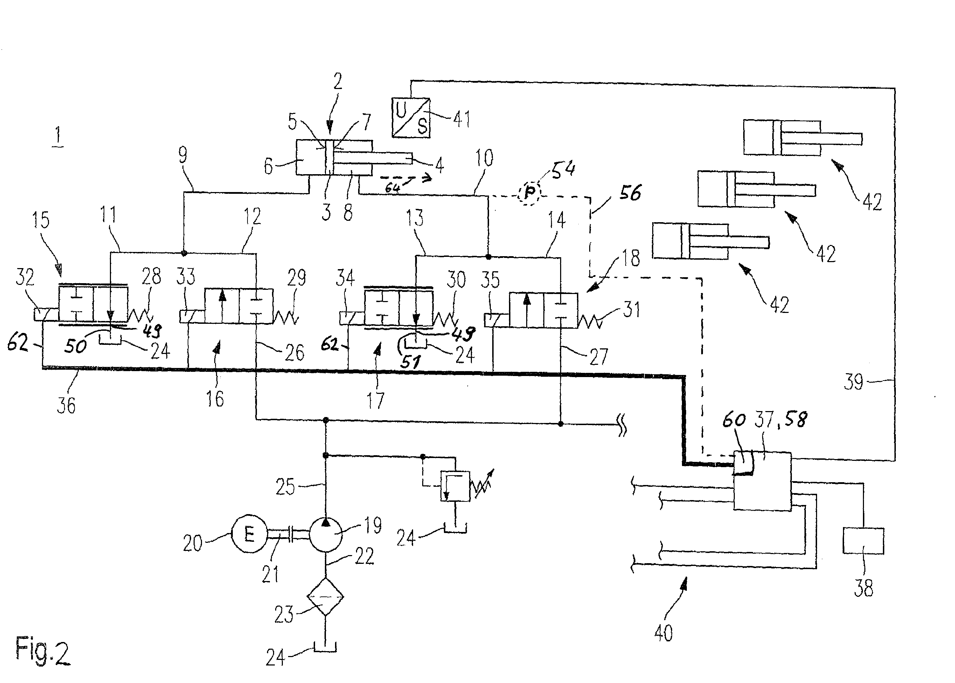

In Figur 2 ist eine Variation des hydraulischen Schaltplans aus Figur 1 dargestellt, bei der das erste Ventil 15 und das dritte Ventil 17 als Proportionalventile ausgebildet sind, deren Druckmittel-Durchlassstrom über die Steuereinheit 37 variabel einstellbar ist. Die Ruheposition des ersten und des dritten Ventils 15, 17 stellt hierbei eine offene, durchströmbare Verbindung zwischen dem Stellraum 6 und dem Tankvolumen 24 dar, so dass bei einem unbestromten Ventil 15, 17 die Stelldruckräume 6, 8 auf gleichem Druckniveau mit dem Tankvolumen 24 liegen. Dabei sind die beiden Ventile 15, 17 direkt und unmittelbar mit dem Tankvolumen 24 verbunden, wobei insbesondere keine weiteren Schalt- oder Proportionalventile zwischen den Ventilen 15, 17 und dem Tankvolumen 24 angeordnet sind. Der Ausgang 49 des ersten und dritten Ventils 15, 17 ist dabei jeweils durch eine separate Leitung 50, 51 direkt mit dem Tankvolumen 24 verbunden. Das zweite Ventil 16 und das vierte Ventil 18 sind jeweils als Schaltventile ausgebildet, die einen sperrenden Zustand und einen durchlassenden Zustand aufweisen. Dabei ist der sperrende Zustand als Ruheposition ausgebildet, so dass bei einem Stromausfall die Verbindung zwischen der Druckmittelquelle 19 und den Stelldruckräumen 6, 8 unterbrochen ist. Die in Figur 2 dargestellte Anordnung mit zwei Proportionalventilen die jeweils mit dem Tankvolumen 24 verbunden sind, und zwei Schaltventilen, die mit der Druckmittelquelle 19 verbunden sind, ist besonders vorteilhaft mit 2/2-Wegeventile 15 bis 18 realisierbar, da hierbei alle vier 2/2-Wegeventile, bzw. gegebenenfalls weitere Vierereinheiten von 2/2-Wegeventile für zusätzliche Kolben 3 günstig in einem gemeinsamen Ventilblock herstellbar sind. Optional weist die Hydraulikschaltung in Figur 2 einen oder mehrere Drucksensoren 54 auf, wie dieser in Figur 2 gestrichelt dargestellt ist. Der Drucksensor 54 ist dabei zwischen dem Stelldruckraum 8 und den parallel geschalteten Ventilen 17, 18 in der Stelldruckleitung 10 angeordnet. Dabei wird der Druck an der Zylinderausgangsseite des Stellraums 8 erfasst und ein Drucksignal 56 an die Auswerteeinheit 58 weitergeleitet. Die Auswerteeinheit 58 weist einen Druckregler 60 auf, mittels dessen ein Stellsignal 62 generiert wird, mit dem die Proportionalventile 15, 17 angesteuert werden. Die Auswerteeinheit 58 ist beispielsweise in das Steuergerät 37 integriert. In der Auswerteeinheit 58 können hierbei Informationen über die Positionen der Geschwindigkeit der Kolbenstange 4 gewonnen werden, wodurch über die elektrische Ansteuerung der Proportionalventile 15, 17 ein Regelkreislauf geschaffen werden kann. Bewegt sich beispielsweise die Kolbenstange 4 in Pfeilrichtung 64 nach rechts (Ausfahrrichtung) kann über den eingezeichneten Drucksensor 54 ein Stellsignal 62 für das Proportionalventil 17 generiert werden, das direkt die Verstellgeschwindigkeit der Kolbenstange 4 über die Auslassgeschwindigkeit des Druckmittels aus dem Stellraum 8 in das Tankvolumen 24 regelt. Dabei ist die Verstellbewegung der Kolbenstange 4 völlig unabhängig von der von der Druckmittelquelle 19 aufgebrachten Leistung, bzw. im Stelldruckraum 6 aufgebauten Druck.

In gleicher Weise kann in die Stelldruckleitung 9 zwischen dem Stelldruckraum 6 und den beiden Ventilen 15, 16 ein weiterer Drucksensor 54 eingebaut werden, um die Einfahrbewegung der Kolbenstange 4 entsprechend über das Proportionalventil 15 zu steuern.

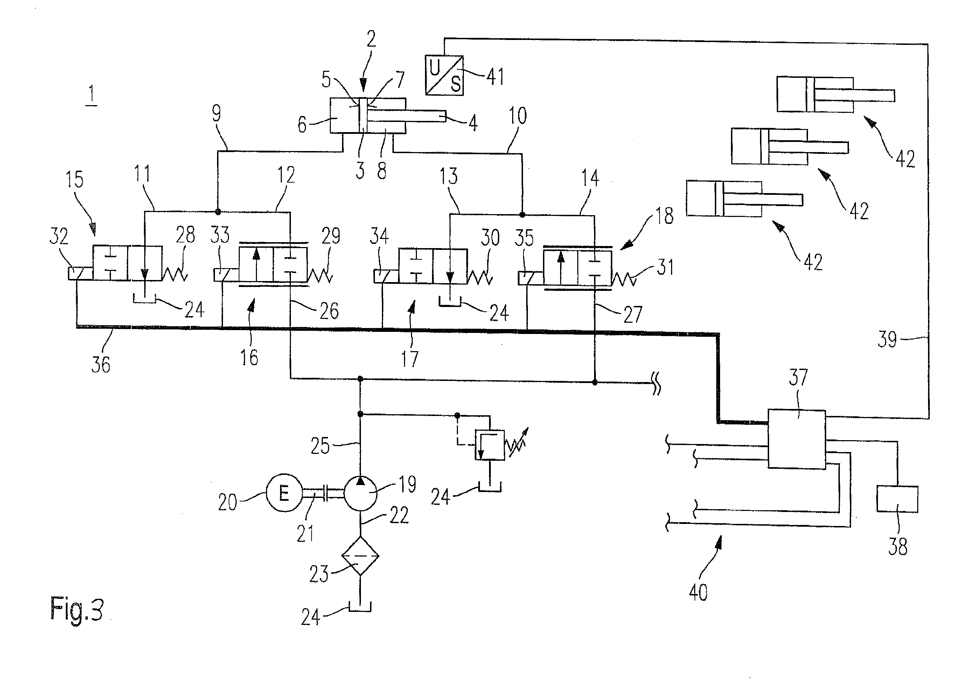

Figur 3 zeigt eine weitere Variante der hydraulischen Schaltung gemäß Figur 1, bei der das zweite Ventil 16 und das vierte Ventil 18 als Proportionalventile und das erste Ventil 15 und das dritte Ventil als Schaltventile ausgebildet sind. Hierbei wird die Verstellgeschwindigkeit der Kolbenstange 4 nicht über den Abfluss des Druckmittels aus den Stelldruckräumen 6 und 8 gesteuert, wie dies in der Schaltung gemäß Figur 2 der Fall ist, sondern über die Zufuhr des Druckmittels von der Druckmittelquelle 19 über die Proportionalventile 16, 18 in die Stelldruckräume 6, 8 hinein. Hierbei kann wiederum unabhängig vom Volumenstrom der Druckmittelquelle 19 der Zufluss des Druckmittels in den Stelldruckraum 6 oder 8 über die variable Durchflusssteuerung der Proportionalventile 16 bzw. 18 gesteuert werden. Hierzu wird beispielsweise das Proportionalventil 16 aus seiner gesperrten Ruhestellung in eine zumindest teilweise geöffnete Schaltstellung überführt, wodurch der Stelldruckraum 6 mittels eines einstellbaren Volumenstroms befüllt, und somit die Kolbenstange 4 nach rechts in Ausfahrrichtung 64 bewegt wird. Dabei ist der Stelldruckraum 8 über das Schaltventil 17 direkt unmittelbar mit dem Volumentank 24 verbunden, so dass die Verstellgeschwindigkeit der Kolbenstange 4 nur durch die Zufuhr des Druckmittels in den Stelldruckraum 6 gesteuert wird. Auch bei dieser Anordnung der Proportionalventile 16, 18 und der Schaltventile 15, 17 können wie in Figur 2 wieder Drucksensoren 54 angeordnet werden, mittels derer der Volumenstrom der Proportionalventile 16, 18 angesteuert wird. Anstelle des einen Kolbens 3 können in der dargestellten Schaltung gleichzeitig auch mehrere Kolben 42 angesteuert werden oder mehrere Schaltungen für mehrere Kolben 42 nebeneinander aufgebaut werden. Die in Figur 1 bis 3 dargestellte Schaltungen können besonders vorteilhaft für die Verstellung des Cabrio-Verdecks verwendet werden, bei dem die einzelnen zueinander beweglich angeordneten Verdeckteile jeweils mit einer Kolbenstange 4 verbunden sind, um diese automatisch zu verstellen.

In einer weiteren Anwendung der hydraulischen Schaltung können insbesondere auch dreh- oder kippbare Teile am Kraftfahrzeug, wie Verschlüsse oder Klappen mittels dem dargestellten Komfortantrieb verstellt werden.

Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. Beispielsweise kann die Anordnung der Drucksensoren 54 und der Wegsensoren 51 mit jeder Variation der hydraulischen Schaltung kombiniert werden, um die entsprechend dargestellten Ansteuerungen zu realisieren.

## Patentansprüche

1. Hydraulische Betätigungsvorrichtung mit zumindest einem Hydraulikzylinder (2), in dem ein Kolben (3) in einem ersten Stelldruckraum (6) mit einer hydraulischen Kraft beaufschlagbar ist und der erste Stelldruckraum (6) mit einer Druckmittelquelle (19) oder einem Tankvolumen (24) verbindbar ist,
**dadurch gekennzeichnet,**
**dass** der erste Stelldruckraum (6) mit dem Tankvolumen (24) über ein erstes Ventil (15) und mit der Druckmittelquelle (19) über ein zweites Ventil (16) verbindbar ist.

2. Hydraulische Betätigungsvorrichtung nach Anspruch 1,
**dadurch gekennzeichnet,**
**dass** der Kolben (3) in einem zweiten Stelldruckraum (8) mit einer hydraulischen Kraft beaufschlagbar ist, die der hydraulischen Kraft in dem ersten Stelldruckraum (6) entgegenwirkt und
**dass** der zweite Stelldruckraum (8) mit dem Tankvolumen (24) über ein drittes Ventil (17) und mit der Druckmittelquelle (19) über ein viertes Ventil (18) verbindbar ist.

3. Hydraulische Betätigungsvorrichtung nach Anspruch 1 oder 2,
**dadurch gekennzeichnet,**
**dass** das erste und das zweite Ventil (15, 16) und/oder das dritte und das vierte Ventil (17, 18) jeweils 2/2-Wegeventile sind.

4. Hydraulische Betätigungsvorrichtung nach einem der Ansprüche 1 bis 3,
**dadurch gekennzeichnet,**
**dass** das erste und das zweite Ventil (15, 16) und/oder das erste und das dritte Ventil (17, 18) Schaltventile sind, die in einer ersten Schaltposition einen Durchfluss sperren und in einer zweiten Schaltposition einen Durchfluss freigeben.

5. Hydraulische Betätigungsvorrichtung nach einem der Ansprüche 1 bis 3,
**dadurch gekennzeichnet,**
**dass** das erste und das zweite Ventil (15, 16) und/oder das erste und das dritte Ventil (17, 18) Proportionalventile sind, die in einer ersten Endposition einen Durchfluss sperren und in einer zweiten Endposition einen Durchfluss freigeben.

6. Hydraulische Betätigungsvorrichtung nach Anspruch 4 oder 5,
**dadurch gekennzeichnet,**
**dass** das erste und das zweite Ventil (15, 16) durch jeweils eine Ventilfeder (28, 29) in einer Ruheposition gehalten werden und die Ruhepositionen des ersten Ventils (15) und des zweiten Ventils (16) unterschiedlichen Schalt- bzw. Endpositionen der beiden Ventile (15, 16) entsprechen.

7. Hydraulische Betätigungsvorrichtung nach einem der Ansprüche 4 bis 6,
**dadurch gekennzeichnet,**
**dass** das dritte und das vierte Ventil (17, 18) durch jeweils eine Ventilfeder (30, 31) in einer Ruhesposition gehalten werden und die Ruhepositionen des dritten Ventils (17) bzw. des vierten Ventils (18) den Schalt- bzw- Endpositionen des ersten Ventils (15) bzw. des zweiten Ventils (16) entsprechen.

8. Hydraulische Betätigungsvorrichtung nach einem der Ansprüche 1 bis 7,
**dadurch gekennzeichnet,**
**dass** die Ventile (15, 16, 17, 18) elektromagnetisch betätigbar sind.

9. Hydraulische Betätigungsvorrichtung nach einem der Ansprüche 1 bis 8,
**dadurch gekennzeichnet,**
**dass** die Druckmittelquelle (19) eine elektromotorisch angetriebene Konstantpumpe ist.

10. Hydraulische Betätigungsvorrichtung nach Anspruch 9,
**dadurch gekennzeichnet,**
**dass** die Drehzahl der elektromotorisch angetriebenen Konstantpumpe (19) einstellbar ist.

11. Hydraulische Betätigungsvorrichtung nach einem der vorhergehenden Ansprüche,
**dadurch gekennzeichnet,**
**dass** das zweite und das vierte Ventil (16, 18) als Schaltventile ausgebildet sind, und das erste und das dritte Ventil (15, 17) als Proportionalventile ausgebildet sind, um den Kolben (3) hydraulisch einzuspannen und das Abströmen des Druckmittels aus dem sich verkleinernden Stelldruckraum (6 bzw. 8) zu verringern.

12. Hydraulische Betätigungsvorrichtung nach einem der vorhergehenden Ansprüche,
**dadurch gekennzeichnet,**
**dass** das erste und das dritte Ventil (15, 17) als Schaltventile ausgebildet sind, und das zweite und das vierte Ventil (16, 18) als als Proportionalventile ausgebildet sind, um die Bewegungsgeschwindigkeit der Kolbenstange (4) zu beeinflussen - insbesondere unabhängig von einer Drehzahlsteuerung des Elektromotors (20) der Druckmittelquelle (19).

13. Hydraulische Betätigungsvorrichtung nach einem der vorhergehenden Ansprüche,
**dadurch gekennzeichnet,**
**dass** das erste und dritte Ventil (15, 17) jeweils separat direkt mit dem Tankvolumen (24) verbunden sind, so das über das erste und dritte Ventil (15, 17) wahlweise der Stelldruckraum (6) oder der Stelldruckraum (8) zu dem Tankvolumen (24) ohne Zwischenschaltung weiterer Ventile entspannbar ist.

14. Hydraulische Betätigungsvorrichtung nach einem der vorhergehenden Ansprüche,
**gekennzeichnet durch**
ein Steuergerät (37), das ― insbesondere über ein Bussystem - den Elektromagneten (32-35) individuell, unabhängig voneinander einen individuell bemessenen Strom zuführt, um die Ventile (15-18) zu betätigen.

15. Hydraulische Betätigungsvorrichtung nach einem der vorhergehenden Ansprüche,
**dadurch gekennzeichnet,**
**dass** mit einem Eingang eines Steuergeräts (37) eine Signalleitung (39) verbunden ist, über die dem Steuergerät (37) ein Spannungssignal eines Wegmessers (41) zugeführt wird, der die jeweilige Position der Kolbenstange (4) erfasst.

16. Hydraulische Betätigungsvorrichtung nach einem der vorhergehenden Ansprüche,
**dadurch gekennzeichnet,**
**dass** die Ruheposition des ersten und des dritten Ventils (15, 17) einer Schaltposition mit durchströmbarer Verbindung vom Stelldruckraum (6 bzw.8) zum Tankvolumen (24) entspricht, wodurch das Druckniveau der Stelldruckräume (6, 8) bei unbestromten Elektromagneten (32-35) dem Druckniveau des Tankvolumens (24) entspricht, und das zweite und vierte Ventil (16, 18) als Ruheposition eine Schaltposition mit gesperrtem Durchfluss aufweisen.

17. Hydraulische Betätigungsvorrichtung nach einem der vorhergehenden Ansprüche,
**dadurch gekennzeichnet,**
**dass** mindestens ein Drucksensor (54) zwischen dem Stellraum (6, 8) und den jeweils parallel zueinander geschalteten 2/2-Wegeventilen (15, 16 bzw. 17, 18) in der Stelldruckleitung (9, 10) angeordnet ist, wobei ein Drucksignal (56) einer Auswerteeinheit (58) zugeführt wird, um die Position und die Geschwindigkeit der Kolbenstange (4), - und damit insbesondere des Cabriolet-Verdecks - zu ermitteln, wobei die Auswerteeinheit (58) über einen Druckregler (60) den unmittelbar mit dem Tankvolumen (24) verbundenen Proportionalventilen (15, 17) ein Stellsignal (62) zuführt, um die Verstell-Geschwindigkeit der Kolbenstange (4), bzw. des Cabriolet-Verdecks zu steuern.

18. Verdeck eines Cabriolets mit einer hydraulischen Betätigungsvorrichtung nach einem der vorangehenden Ansprüche,
**dadurch** gekennzeichent,
dass mindestens eine Klobenstange (4) mindestens eines Kolbens (3) fest mit dem Cabriolet-Verdeck verbunden ist.

19. Verfahren zumBetätigen einer Klappe oder oder eines Verdecks eines Cabriolets mittels einer hydraulischen Betätigungsvorrichtung nach einem der vorhergehneden Ansprüche mit mindestens einem doppelwirkendem Hydraulikzylinder, der einen ersten und eienen zweiten Stellraum (6,8) aufweist, mit folgenden Verfahrensschritten:
- der Stellraum (6) wird zum Ausfahren der Kolbenstange (4) über das zweite, als Schaltventil (16) ausgebildete 2/2-Wegeventil (16) mit Druck von der Druckmittelquelle (19) beaufschlagt,
- der zweite Stellraum (8) wird dabei über das dritte 2/2-Wegeventil (17), das als Proportionalventil (17) ausgebildet ist, zum Tankvolumen (24) hin entspannt geschaltet, so dass hydraulisches Druckmittel vom Ventil (17) direkt in einer separaten Leitung (51), insbesondere ohne Zwischenschaltung weiterer Ventile, in das Tankvolumen (24) fließt
- zum Einfahren der Kolbenstange (4) wird der Stellraum (8) über das vierte, als Schaltventil (18) ausgebildete 2/2-Wegeventil (18) mit Druck von der Druckmittelquelle (19) beaufschlagt,
- gleichzeitig wird dabei der erste Stellraum (6) über das erste 2/2-Wegeventil (15), das als Proportionalventil (15) ausgebildet ist, zum Tankvolumen (24) hin entspannt geschaltet, so dass hydraulisches Druckmittel vom Ventil (15) direkt in einer separaten Leitung (50), insbesondere ohne Zwischenschaltung weiterer Ventile, in das Tankvolumen (24) fließt.
